(19) Europäisches Patentamt
European Patent Office
Office européen des brevets

(11) EP 4 310 109 A1

(12) **EUROPEAN PATENT APPLICATION**
published in accordance with Art. 153(4) EPC

(43) Date of publication:
**24.01.2024 Bulletin 2024/04**

(21) Application number: **22771539.8**

(22) Date of filing: **18.03.2022**

(51) International Patent Classification (IPC):
***C08F 8/00*** *(2006.01)* ***C08F 210/02*** *(2006.01)*
***C08L 23/08*** *(2006.01)*

(52) Cooperative Patent Classification (CPC):
**C08F 8/00; C08F 210/02; C08F 220/14;
C08L 23/08**

(86) International application number:
**PCT/JP2022/012516**

(87) International publication number:
**WO 2022/196794 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021045926**

(71) Applicant: **Unimatec Co., Ltd.
Tokyo 105-0012 (JP)**

(72) Inventors:
- **TOGE Daichi
Kitaibaraki-shi, Ibaraki 319-1544 (JP)**
- **WATANABE Daiki
Kitaibaraki-shi, Ibaraki 319-1544 (JP)**
- **ABE Kazunari
Kawasaki-shi, Kanagawa 210-8548 (JP)**
- **SOUTOME Ikuo
Kawasaki-shi, Kanagawa 210-8548 (JP)**

(74) Representative: **Kraus & Weisert
Patentanwälte PartGmbB
Thomas-Wimmer-Ring 15
80539 München (DE)**

# (54) ETHYLENE-(METH)ACRYLATE ELASTOMER AND MANUFACTURING METHOD THEREFOR

(57) An ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid, and 0.001 to 20.0 mol% of an unsaturated dicarboxylic anhydride are copolymerized, and having a melt flow rate of 0.01 to 100 g/10 min measured under the conditions of a temperature of 190°C and a load of 2.16 kg. The ethylene-(meth)acrylate-based elastomer gives a vulcanizate having excellent heat resistance, oil resistance, and molding processability.

EP 4 310 109 A1

## Description

### TECHNICAL FIELD

The present invention relates to an ethylene-(meth)acrylate-based elastomer and a method for producing the same. More particularly, the present invention relates to an ethylene-(meth)acrylate-based elastomer that gives a vulcanizate having excellent heat resistance, oil resistance and molding processability, and a method for producing the same.

### BACKGROUND ART

As a copolymer that gives a vulcanizate having excellent oil and heat resistance, Patent Document 1 and 2 have proposed the following copolymers.
Patent Document 1 has described a random copolymer comprising ethylene, methyl acrylate or ethyl acrylate, and 1,4-butenedioic acid monoalkyl ester as monomers. This copolymer is produced by polymerization at high pressure; however, due to the corrosive nature of 1,4-butenedioic acid monoalkyl ester, corrosion-resistant high-pressure equipment is required.
Patent Document 2 discloses an amine crosslinkable rubber composition comprising a copolymer comprising ethylene, an acrylic acid ester and maleic anhydride as monomers, and a primary or secondary polyamine. The crosslinking reaction rate of this composition is too fast that scorch time gets shorter, which makes it difficult to mold rubber parts etc.
Patent Document 3 indicates that when an ethylene-alkyl (meth)acrylate-maleic anhydride-maleic acid monoester quaternary copolymer is modified with an unsaturated amine or unsaturated alcohol, a half ester copolymer of maleic acid is obtained by kneading with Labo Plastomill.
It also describes that regarding the hydrolysis reaction or half-esterification reaction of the raw material terpolymer, the hydrolysis reaction is carried out in an organic solvent in the presence of a catalyst, such as a tertiary amine salt, and the half esterification reaction is carried out by a similar solution method or melting method and in the melting method, kneading machines, such as Banbury mixers and extruders, are used; however, the solution method is used in all the examples.

### PRIOR ART DOCUMENT

### PATENT DOCUMENT

Patent Document 1 : JP-A-50-49389
Patent Document 2 : JP-A-60-240749
Patent Document 3 : JP-A-61-272204
Patent Document 4 : JP-B-7-94486
Patent Document 5 : JP-A-8-25586
Patent Document 6 : JP-A-2010-235955

### OUTLINE OF THE INVENTION

### PROBLEM TO BE SOLVED BY THE INVENTION

An object of the present invention is to provide an ethylene-(meth)acrylate-based elastomer that can give a vulcanizate having excellent heat resistance, oil resistance, and molding processability, and to also provide a method for producing the same.

### MEANS FOR SOLVING THE PROBLEM

The above object of the present invention can be achieved by an ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.001 to 20.0 mol% of an unsaturated dicarboxylic acid, and 0.05 to 20.0 mol% of an unsaturated dicarboxylic anhydride are copolymerized, and having a melt flow rate of 0.01 to 100 g/10 min measured under the conditions of a temperature of 190°C and a load of 2.16 kg.
The ethylene-(meth)acrylate-based elastomer is produced by copolymerizing ethylene, an alkyl (meth)acrylate

containing an alkyl group having 1 to 8 carbon atoms and/or an alkoxy (meth)acrylate containing an alkoxyalkyl group having 2 to 8 carbon atoms, and an unsaturated dicarboxylic anhydride, followed by ring-opening treatment of the unsaturated dicarboxylic anhydride.

## EFFECT OF THE INVENTION

Vulcanizates obtained from the ethylene-(meth)acrylate-based elastomer according to the present invention have excellent heat resistance, oil resistance, and molding processability, and thus are effectively used as rubber parts in a wide range of fields, such as transportation equipment (such as automobiles), industrial machinery, general equipment, and electrical equipment. Examples of such rubber parts include O rings, various packings, oil seals, bearing seals, head cover gaskets, plug tube gaskets, engine head cover gaskets, oil filter packings, oil pan gaskets, anti-vibration parts, hoses such as oil hoses, fuel hoses, air hoses, air duct hoses, turbocharger hoses, PCV hoses, EGR hoses, and intercooler hoses, and the like.

## EMBODIMENTS FOR CARRYING OUT THE INVENTION

As the (meth)acrylate, at least one of an alkyl (meth)acrylate containing an alkyl group having 1 to 8 carbon atoms and an alkoxy (meth)acrylate containing an alkoxyalkyl group having 2 to 8 carbon atoms is used. These can be used singly or in combination of two or more thereof. Here, (meth)acrylate refers to acrylate or methacrylate.

Examples of the alkyl (meth)acrylate include methyl (meth)acrylate, ethyl (meth)acrylate, propyl (meth)acrylate, isopropyl (meth)acrylate, n-butyl (meth)acrylate, n-hexyl (meth)acrylate, 2-ethylhexyl (meth)acrylate, n-octyl (meth)acrylate, and the like. Alkyl groups having a longer chain length are generally advantageous in terms of cold resistance, but are disadvantageous in terms of oil resistance. Alkyl groups having a shorter chain length show an opposite tendency. In terms of the balance between oil resistance and cold resistance, methyl acrylate, ethyl acrylate and n-butyl acrylate are preferably used. More Preferably, methyl acrylate is used.

Moreover, examples of the alkoxyalkyl (meth)acrylate include methoxymethyl (meth)acrylate, methoxyethyl (meth)acrylate, ethoxyethyl (meth)acrylate, n-butoxyethyl (meth)acrylate, ethoxypropyl (meth)acrylate, methoxyethoxyethyl (meth)acrylate, ethoxyethoxyethyl (meth)acrylate, and the like.

The unsaturated dicarboxylic anhydride is a compound having one or more radically polymerizable unsaturated bonds and one or more acid anhydride groups in the molecule. Examples thereof include maleic anhydride, citraconic anhydride, itaconic anhydride, 2,3-dimethylmaleic anhydride, 2-(2-carboxyethyl)-3-methylmaleic anhydride, 3,4,5,6-tetrahydrophthalic anhydride, phenylmaleic anhydride, 2,3-diphenylmaleic anhydride, allylsuccinic anhydride, (2-methyl-2-propenyl)succinic anhydride, 2-buten-1-ylsuccinic anhydride, cis-4-cyclohexene-1,2-dicarboxylic anhydride, 5-norbornene-2,3-dicarboxylic anhydride, bicyclo[2.2.2]oct-5-ene-2,3-dicarboxylic anhydride, and the like; preferably, maleic anhydride, itaconic anhydride, and citraconic anhydride are used. These can be used singly or in combination of two or more thereof.

In addition to the above monomers, if necessary, other copolymerizable monomers can also be used as long as the characteristics are not impaired. Examples of such copolymerizable monomers include vinyl compounds, such as styrene, vinyl toluene, $\alpha$-methylstyrene, vinyl naphthalene, acrylonitrile, methacrylonitrile, acetone acrylamide, 2-hydroxyethyl acrylate, 4-hydroxybutyl acrylate, 2-hydroxy-3-chloropropyl (meth)acrylate, vinyl chloride, vinylidene chloride, vinyl fluoride, vinylidene fluoride, chloroethyl vinyl ether, hydroxyethyl vinyl ether, hydroxybutyl vinyl ether, pentafluoropropyl (meth)acrylate, and trifluoroethyl (meth)acrylate; diene compounds, such as isoprene, pentadiene, and butadiene; and $\alpha$-olefins, such as propylene, 1-butene, 1-hexene, and 1-octene. Furthermore, in order to improve kneading processability, extrusion processability, and other properties, a polyfunctional (meth)acrylate or oligomer can be further copolymerized. Examples thereof include di(meth)acrylates of alkylene glycols, such as ethylene glycol, propylene glycol, 1,4-butanediol, 1,6-hexanediol, and 1,9-nonanediol; di(meth)acrylates, such as neopentyl glycol, tetraethylene glycol, tripropylene glycol, and polypropylene glycol; bisphenol A • ethylene oxide adduct diacrylate, dimethylol tricyclodecane diacrylate, glycerol methacrylate acrylate, 3-acryloyloxyglycerol monomethacrylate, and the like.

Method for producing the copolymer is not particularly limited, and various polymerization methods, such as radical solution polymerization (Patent Documents 4 and 5), can be suitably used. In general, the copolymer can be produced by utilizing high-pressure low-density polyethylene production equipment and technology. For example, the copolymer is produced by a bulk polymerization method at a polymerization pressure of 70 to 350 MPa, preferably 100 to 250 MPa, or by a radical polymerization method at a polymerization temperature of 100 to 300°C, preferably 150 to 270°C. If the polymerization pressure is less than 70 MPa, the molecular weight of the polymer becomes low, and moldability and the resin physical properties of the resin composition deteriorate. In contrast, exceeding 350 MPa just increases the production cost and is practically meaningless. Further, if the polymerization temperature is lower than 100°C, the polymerization reaction is not stable, and the conversion rate to the copolymer decreases, which is economically a problem. In contrast, if the polymerization temperature exceeds 300°C, the molecular weight of the copolymer

is reduced, and the risk of runaway reactions arises at the same time.

Since radically polymerizable dicarboxylic anhydrides have poor polymerization stability, a high degree of homogenization in the reactor is required. Moreover, if necessary, multiple reactors can be connected in series or in parallel to carry out multistage polymerization. Further, more precise temperature control can be achieved by partitioning the inside of the reactor into multiple zones. It is also possible to adjust the polymerization reaction speed by adjusting the temperature of ethylene subjected to polymerization. The larger the temperature difference from the polymerization temperature is, the faster the polymerization reaction speed gets.

The polymerization reaction is carried out in the presence of at least one free radical polymerization initiator. As the free radical polymerization initiator used in radical polymerization, a compound that generates free radicals is selected. Examples thereof include oxygen; dialkyl peroxides, such as di-tert-butyl peroxide, tert-butyl cumyl peroxide, and dicumyl peroxide; diacyl peroxides, such as acetyl peroxide, isobutyl peroxide, and octanoyl peroxide; peroxydicarbonates, such as diisopropyl peroxydicarbonate and di(2-ethylhexylperoxy)dicarbonate; peroxyesters, such as tert-butyl peroxyisobutyrate, tert-butyl peroxyneodecanoate, tert-butyl peroxypivalate, and tert-butyl peroxylaurate; ketone peroxides, such as methyl ethyl ketone peroxide and cyclohexanone peroxide; peroxyketals, such as 1,1-bis-tert-butylperoxycyclohexane and 2,2-bis-tert-butylperoxyoctane; hydroperoxides, such as tert-butyl hydroperoxide and cumene hydroperoxide; azo compounds, such as 2,2-azobisisobutyronitrile; and the like.

The obtained ethylene-(meth)acrylate-based copolymer containing an acid anhydride is subjected to a ring-opening treatment using a shear melt-kneading method under shear conditions, preferably using a closed kneader or a twin screw extruder.

The ring-opening treatment by a shear melt-kneading method is carried out by reacting the ethylene-(meth)acrylate-based copolymer containing an acid anhydride with water, which is used in an amount of about 0.1 to 30 parts by weight, preferably about 1 to 20 parts by weight, based on 100 parts by weight of the copolymer, while applying shear using a kneading machine. A ring-opening catalyst can be also used to promote the ring-opening. The ring-opening treatment can be performed without using any solvent; however, a small amount of solvent can be also used for the purpose of adjusting fluidity.

As the kneading machine that can be used in the ring-opening treatment, for example, a single screw extruder, a twin screw extruder, a kneader, a roll kneader, a Banbury mixer, a Brabender mixer, a reciprocating kneader (BUSS KNEADER), or the like can be used without limitation. Preferred are a single screw extruder, a twin screw extruder, and a reciprocating kneader (BUSS KNEADER), which can continuously perform the ring-opening treatment and are advantageous in terms of productivity; and more preferred in terms of the versatility of incidental equipment is a twin screw extruder.

As the ring-opening catalyst, an acid catalyst and a base catalyst can both be used. Examples of the acid catalyst include organic acids, such as benzenesulfonic acid, p-toluenesulfonic acid, methanesulfonic acid, ethanesulfonic acid, and trifluoroacetic acid; mineral acids, such as hydrochloric acid, nitric acid, sulfuric acid, and phosphoric acid; and heteropolyacids, such as heteropolyacids and heteropolyacid salts. Examples of the base catalyst include inorganic bases, such as carbonates and hydroxides of alkali metals and alkaline earth metals, aliphatic or aromatic organic bases, fatty acid salts of alkali metals or alkaline earth metals, and the like; preferably, organic base is used. Examples of the organic base include 1,8-diazabicyclo[5.4.0]undecene-7 or 1,5-diazabicyclo[4.3.0]nonene-5 and salts thereof, amine compounds, such as tertiary amines, imidazole, and the like. The ring-opening catalyst is used at a ratio of about 0.01 to 10 parts by weight, preferably about 0.1 to 5 parts by weight, based on 100 parts by weight of the acid anhydride-containing ethylene-(meth)acrylate-based copolymer.

Due to the ring-opening treatment, an ethylene-(meth)acrylate-based elastomer is obtained, in which the copolymerized dicarboxylic anhydride has a structure in which a dicarboxylic acid compound, such as maleic acid, fumaric acid, itaconic acid, citraconic acid, mesaconic acid, or glutaconic acid, is copolymerized, and the ratio of the unsaturated dicarboxylic acid compound structure is 20 to 99.9 mol% to the total amount of the unsaturated dicarboxylic anhydride and the dicarboxylic acid compound structure, which is its ring-opening treated product. Here, the ring-opening rate is preferably about 70 to 98% at 23°C after 1 day.

Claim 1 of Patent Document 3 defines that the total amount of an unsaturated dicarboxylic acid and an acid anhydride thereof in the ethylene-alkyl(meth)acrylate copolymer is 0.1 to 5.0 mol%; however, the ring-opened products disclosed in the examples of Patent Document 3 are only those with a ring-opening rate of 100%. Patent Document 3 does not disclose any copolymer containing an unsaturated dicarboxylic acid and an acid anhydride thereof as monomers. Patent Document 3 is also different from the present invention in that the ring-opening treatment by hydrolysis is performed by a solvent method, in which a copolymer is dissolved in a solvent. Furthermore, this document only discloses intermediates to be subjected to modification treatment, and does not disclose any characteristics of the composition using these intermediates.

After the ring-opening treatment, an aging treatment is preferably performed in order to improve the ring-opening rate. The aging temperature is about 0 to 100°C, and the aging time is suitably set depending on the aging temperature. For example, at room temperature of 23°C, the aging time is set to 1 day or more. If the aging temperature rises, it is

possible to shorten the aging time according to the temperature rise; however, from an economic point of view, aging at room temperature is adopted.

Among the ring-opened ethylene-(meth)acrylate-based elastomers, in terms of obtaining a vulcanizate having excellent heat resistance, oil resistance, and molding processability, one having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid, and 0.001 to 20.0 mol% of an unsaturated dicarboxylic anhydride are copolymerized, and having a melt flow rate of 0.01 to 100 g/10 min measured under the conditions of a temperature of 190°C and a load of 2.16 kg is selected. This elastomer is compounded with a vulcanizing agent to prepare an ethylene-(meth)acrylate-based elastomer composition.

As the vulcanizing agent for the ethylene-(meth)acrylate-based elastomer, an amine-based vulcanizing agent or an organic peroxide crosslinking agent can be used.

Examples of the amine-based vulcanizing agent include aliphatic polyvalent amine compounds, such as hexamethylenediamine, hexamethylenediamine carbamate, N,N'-dicinnamylidene-1,6-hexanediamine, 4,4'-bis(aminocyclohexyl)methane, ethylenediamine, ethylenediamine carbamate, cyclohexanediamine, bis(hexamethylene)triamine, 3,3'-diaminopropylamine, cyclohexanetriamine, hexamethylenediamine-cinnamaldehyde adduct, hexamethylenediamine benzoate, and diamino-modified siloxane; alicyclic polyamine compounds, such as 4,4'-methylenebiscyclohexylamine, bis(4-amino-3-methyldicyclohexyl)methane, and 4,4'-methylenebiscyclohexylamine-cinnamaldehyde adduct; aromatic polyamine compounds, such as N,N'-dicinnamylidene-1,6-hexanediamine, 4,4'-($\alpha$,$\alpha$-dimethylbenzyl)diphenylamine, 4,4'-methylenedianiline, m-phenylenediamine, 4,4'-diaminodiphenyl ether, p-phenylenediamine, p,p'-ethylenedianiline, 4,4'-(p-phenylenediisopropylidene)dianiline, 4,4'-(m-phenylenediisopropylidene)dianiline, 3,4'-diaminodiphenyl ether, 4,4'-diaminodiphenyl sulfone, 2,2-bis[4-(4-aminophenoxy)phenyl]propane, bis[4-(4-aminophenoxy)phenyl]sulfone, bis[4-(3-aminophenoxy)phenyl]sulfone, 4,4'-bis(4-aminophenoxy)biphenol, bis[4-(4-aminophenoxy)phenyl]ether, 2,2-bis[4-(4-aminophenoxy)phenyl]hexafluoropropane, 1,4-bis(4-aminophenoxy)benzene, 1,3-bis(4-aminophenoxy)benzene, m-xylylenediamine, p-xylylenediamine, 1,3,5-benzenetriamine, and 4,4'-diaminobenzanilide; and the like. Further, an aliphatic polyvalent amine with an amino group protected by an organic group can also be used.

The diurethane compound disclosed in Patent Document 6 etc. represented by the general formula:

$$R^2(SO_2)_m(CH_2)_nOCONHR^1NHCOO(CH_2)_n(SO_2)_mR^2$$

(wherein $R^1$ is a $C_1$-$C_{20}$ linear or branched divalent aliphatic alkylene group, a divalent alicyclic hydrocarbon group, or a divalent aromatic group; $R^2$ is a group that can be decomposed by the action of a basic vulcanization accelerator to generate diamine when it has a carbamate structure, and represents a $C_1$-$C_{20}$ alkyl group, an alkoxyl group, a phenoxy group, a haloalkyl group, an olefinic group, an aryl group or an aralkyl group, a fluorenyl-containing group, an S-containing group, an Si-containing group, an N-containing group, or a P-containing group, wherein the S-containing group or N-containing group is an aromatic or alicyclic heterocyclic group; n is 0, 1, or 2; and m is 0 or 1), preferably a diurethane compound obtained by di-substituting the amino group of alkylenediamine represented by the general formula $H_2N(CH_2)_1NH_2$ (l = 4 to 6) with 9-fluorenylmethyl chloroformate [Fmoc], more preferably a diurethane compound [HMDA-Fmoc] obtained by di-substituting the amino group of hexamethylenediamine (l=6) with [Fmoc]:

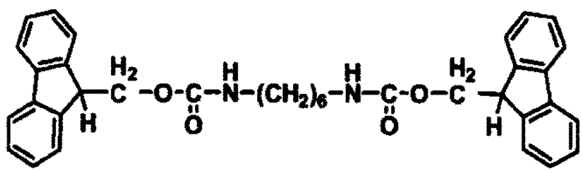

can also be used.

Such a polyamine compound vulcanizing agent is used at a ratio of about 0.1 to 5 parts by weight, preferably 0.5 to 2 parts by weight, based on 100 parts by weight of the ethylene-(meth)acrylate-based elastomer. If the compounding amount of the vulcanizing agent is less than this range, vulcanization is insufficient, which leads to deterioration of the mechanical properties of the vulcanizate and decrease of the vulcanization rate. If the compounding amount of the vulcanizing agent is greater than this range, excessive vulcanization may progress to reduce the elasticity of the vulcanizate. In the vulcanization, a basic vulcanization accelerator, a thiuram-based crosslinking accelerator, and a thiourea-based crosslinking accelerator are desirably used in combination with a ratio of about 0.5 to 5 parts by weight, preferably 0.5 to 3 parts by weight, based on 100 parts by weight of the ethylene-(meth)acrylate-based elastomer.

As the basic vulcanization accelerator, guanidine compounds or diazabicycloalkene compounds, such as 1,8-diazabicyclo[5.4.0]undecene-7 and 1,5-diazabicyclo[4.3.0]nonene-5, or organic acid salts or inorganic acid salts thereof

are used. From the viewpoint of a higher addition effect, 1,8-diazabicyclo[5.4.0]undecene-7[DBU] is preferably used. Moreover, a mixture of 1,8-diazabicyclo[5.4.0]undecene-7 and silica can also be used. In practice, for example, Vulcofac ACT55, produced by Safic Alcan and the like are used.

Examples of the compound that forms an organic acid salt or inorganic acid salt of the diazabicycloalkene compound include hydrochloric acid, sulfuric acid, carboxylic acid, sulfonic acid, phenol, and the like. Examples of the carboxylic acid include octylic acid, oleic acid, formic acid, orthophthalic acid, adipic acid, and the like. Further, examples of the sulfonic acid include benzenesulfonic acid, toluenesulfonic acid, dodecylbenzenesulfonic acid, naphthalenesulfonic acid, and the like. These can be used singly or in combination of two or more thereof.

Usable examples of the guanidine compound include guanidine or substituted guanidine, such as aminoguanidine, 1,1,3,3-tetramethylguanidine, n-dodecylguanidine, methylol guanidine, dimethylolguanidine, 1-phenylguanidine, 1,3-diphenylguanidine, 1,3-di-o-tolylguanidine, triphenylguanidine, 1-benzyl-2,3-dimethylguanidine, cyanoguanidine, and the like. In addition, 1,6-guanidinohexane, guanylurea, biguanide, 1-o-tolylbiguanide, and the like can also be used.

Examples of the thiuram-based compound include tetramethylthiuram disulfide and the like, and examples of the thiourea-based compound include N,N'-diphenylthiourea and the like.

Examples of the organic peroxide include di-tert-butyl peroxide, dicumyl peroxide, di-tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexin-3, 1,3-di(tert-butylperoxydiisopropyl)benzene, 2,5-dimethyl-2,5-di(benzoylperoxy)hexane, tert-butylperoxybenzoate, tert-butylperoxy isopropyl carbonate, n-butyl-4,4-di(tert-butylperoxy)valerate, and the like. Such an organic peroxide is used at a ratio of about 0.2 to 10 parts by weight, preferably about 0.75 to 2 parts by weight, based on 100 parts by weight of the ethylene-(meth)acrylate-based elastomer.

For the peroxide crosslinkable composition, a crosslinking aid for peroxide crosslinking comprising polyfunctional unsaturated compounds is preferably used in combination. Usable examples of the polyfunctional unsaturated compound include ethylene glycol di(meth)acrylate, propylene glycol di(meth)acrylate, triallyl(iso)cyanurate, trimethylolpropane tri(meth)acrylate, triallyl trimellitate, and bismaleimide compounds (e.g., N,N'-m-phenylenebismaleimide, N,N'-p-phenylenebismaleimide, N,N'-p-phenylene-(1-methyl)bismaleimide, N,N'-2,7-naphthalenebismaleimide, N,N'-m-phenylene-4-methylbismaleimide, and N,N'-m-phenylene(4-ethyl)bismaleimide. Preferably, N,N'-m-phenylenedimaleimide is used at a ratio of about 0.2 to 15 parts by weight, preferably about 1 to 10 parts by weight, based on 100 parts by weight of the copolymer.

To the ethylene-(meth)acrylate-based elastomer, if necessary, various additives, such as reinforcing agents, fillers, processing aids, plasticizers, softeners, antioxidants, coloring agents, stabilizers, adhesive aids, mold release agents, conductivity-imparting agents, thermal conductivity-imparting agents, surface non-adhesive agents, tackifiers, flexibility-imparting agents, heat resistance-improving agents, flame retardants, ultraviolet absorbers, oil resistance-improving agents, anti-scorching agents, and lubricants are appropriately added to be used.

Examples of the reinforcing agent and filler include silica, such as basic silica and acidic silica; metal oxides, such as magnesium oxide, zinc oxide, calcium oxide, titanium oxide, and aluminum oxide; metal hydroxides, such as magnesium hydroxide, aluminum hydroxide, and calcium hydroxide; metal carbonates, such as magnesium carbonate, aluminum carbonate, calcium carbonate, and barium carbonate; silicates, such as magnesium silicate, calcium silicate, sodium silicate, and aluminum silicate; sulfates, such as aluminum sulfate, calcium sulfate, and barium sulfate; synthetic hydrotalcite; metal sulfides, such as molybdenum disulfide, iron sulfide, and copper sulfide; diatomaceous earth, asbestos, lithopone (zinc sulfide/barium sulfide), graphite, carbon black (MT carbon black, SRF carbon black, FEF carbon black, HAF carbon black, etc.), fluorinated carbon, calcium fluoride, coke, quartz fine powder, zinc white, talc, mica powder, wollastonite, carbon fiber, aramid fiber, various whiskers, glass fiber, organic reinforcing agents, organic fillers, and the like.

Examples of the antioxidant include amine-based antioxidants, such as phenyl-$\alpha$-naphthylamine, phenyl-$\beta$-naphthylamine, p-(p-toluenesulfonylamide)-diphenylamine, 4,4'-($\alpha$,$\alpha$-dimethylbenzyl)diphenylamine, N,N-diphenyl-p-phenylenediamine, N-isopropyl-N'-phenyl-p-phenylenediamine, and butylaldehyde-aniline condensates; phenol antioxidants, such as styrenated phenols such as 2,6-di-tert-butylphenol, butylhydroxyanisole, 2,6-di-tert-butyl-$\alpha$-dimethylamino-p-cresol, octadecyl-3-(3,5-di-tert-butyl-4-hydroxyphenyl)propionate, and mono, di or tri (a-methylbenzyl)phenol, 2,2'-methylene-bis(6-$\alpha$-methylbenzyl-p-cresol), 4,4'-methylenebis(2,6-di-tert-butylphenol), 2,2'-methylenebis(4-methyl-6tert-butylphenol), alkylated bisphenol, butylated reaction products of p-cresol and dicyclopentadiene, 1,3,5-tris(3',5'-di-tert-butyl-4'-hydroxybenzyl)isocyanurate, 1,1,3-tris(2-methyl-4-hydroxy-5-tert-butylphenyl)butane, butylidenebis(methyl-butylphenol), n-octadecyl 3-(4'-hydroxy-3',5'-di-tert-butylphenyl)propionate, pentaerythritol tetrakis[3-(3 ',5' -di-tert-butyl-4' - hydroxyphenyl)propionate], 2,2'-dimethyl-2,2'-(2,4,8,10-tetraoxaspiro[5.5]undecane-3,9-diyl)dipropane-1,1'-diylbis[3-(tert-butyl-4-hydroxy-5-methylphenyl)propanoate], 1,3,5-trimethyl-2,4,6-tris(3,5-di-tert-butyl-4-hydroxybenzyl)benzene, and 2,6-di-tert-butyl-4-methylphenol; phosphite-based antioxidants, such as 3,9-dioctadecan-1-yl-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,4,8,10-tetra-tert-butyl-6-[(2-ethylhexan-1-yl)oxy]-12H-dibenzo[d,g][1,3,2]dioxaphosphosine, tris(2,4-di-tert-butylphenyl)phosphite, trisnonylphenyl phosphite, 2-ethylhexyl diphenyl phosphite, diphenyl isodecyl

phosphite, triisodecyl phosphite, and triphenyl phosphite; other thiophenol-based antioxidants, sulfur ester-based antioxidants, imidazole-based antioxidants, quinoline-based antioxidants, hydroquinone-based antioxidants, and the like. These antioxidants can be used singly or in combination of two or more thereof.

Examples of the processing aid include higher fatty acids, such as stearic acid, oleic acid, palmitic acid, and lauric acid; higher fatty acid salts, such as sodium stearate and zinc stearate; higher fatty acid amides, such as amide stearate and amide oleate; higher fatty acid esters, such as ethyl oleate; petroleum-based waxes, such as carnauba wax and ceresin wax; polyglycols, such as ethylene glycol, glycerol, and diethylene glycol; aliphatic hydrocarbons, such as vaseline and paraffin; silicone-based oils, silicone-based polymers, low-molecular-weight polyethylene, phthalic acid esters, phosphoric acid esters, rosin, (halogenated) dialkyl amine, (halogenated) dialkyl sulfone, surfactants, and the like.

Examples of the plasticizer include epoxy resin and derivatives of phthalic acid and sebacic acid, and the like. Examples of the softener include lubricating oil, process oil, coal tar, castor oil, and calcium stearate, and the like.

The preparation of the composition is carried out by adding a reinforcing agent, a stabilizer, a processing aid, and the like to the ethylene-(meth)acrylate-based elastomer using an open roll or a closed kneader and thereafter further adding a vulcanizing agent and a vulcanization accelerator. Vulcanization molding is carried out by performing primary vulcanization at about 150 to 200°C for about 1 to 30 minutes, optionally followed by oven vulcanization (secondary vulcanization) at about 150 to 200°C for about 1 to 16 hours. For molding, known methods, such as press molding, transfer molding, injection molding, and extrusion molding, can be applied depending on the product.

## EXAMPLES

The following describes the present invention with reference to Examples.

### Polymerization Examples 1 to 16

In Polymerization Example 1, high-pressure method low-density polyethylene plant equipment with a 5 L autoclave was used, and monomers were injected into a reactor so that the monomer composition at the reactor inlet was 91.2 wt% of ethylene, 8.7 wt% of methyl acrylate, and 0.11 wt% of maleic anhydride. Di-(2-ethylhexyl peroxy)dicarbonate was used as a reaction initiator, and the polymerization was carried out under the conditions of a polymerization temperature of 165°C and a polymerization pressure of 165 MPa. In other production examples, various copolymers shown in Table 1 were obtained by adjusting the monomer composition, polymerization temperature, and polymerization pressure.

Table 1

| Polymerization Example | Copolymerization composition ratio | | | Polymerization conditions | | | | | |
|---|---|---|---|---|---|---|---|---|---|
| | MA content | MAH content | E content | Polymerization temperature | Polymerization pressure | Monomer composition | | | Polymerization rate |
| | | | | | | ethylene | MA | MAH | |
| | mol% | mol% | mol% | °C | MPa | wt% | wt% | wt% | kg/hr |
| Polymerization Example 1 | 17.8 | 0.5 | 81.7 | 165 | 170 | 91.2 | 8.7 | 0.11 | 320 |
| Polymerization Example 2 | 30.2 | 0.4 | 69.4 | 200 | 120 | 85.3 | 14.7 | 0.10 | 3.00 |
| Polymerization Example 3 | 35.1 | 0.4 | 64.4 | 165 | 170 | 88.7 | 11.2 | 0.10 | 2.18 |
| Polymerization Example 4 | 35.5 | 0.5 | 64.0 | 165 | 170 | 88.7 | 11.2 | 0.10 | 3.00 |
| Polymerization Example 5 | 31.6 | 0.6 | 67.9 | 165 | 140 | 88.7 | 11.2 | 0.10 | 2.40 |
| Polymerization Example 6 | 33.4 | 0.4 | 66.1 | 165 | 170 | 88.7 | 11.2 | 0.10 | 3.06 |
| Polymerization Example 7 | 29.4 | 0.5 | 70.1 | 165 | 170 | 90.1 | 9.8 | 0.09 | 1.97 |
| Polymerization Example 8 | 26.8 | 0.4 | 72.7 | 170 | 170 | 92.3 | 7.6 | 0.07 | 1.70 |
| Polymerization Example 9 | 29.3 | 0.5 | 70.2 | 155 | 165 | 91.6 | 8.3 | 0.08 | 2.18 |
| Polymerization Example 10 | 29.6 | 0.3 | 70.1 | 160 | 165 | 902 | 9.7 | 0.10 | 3.15 |
| Polymerization Example 11 | 29.2 | 0.5 | 70.3 | 175 | 165 | 89.5 | 10.4 | 0.11 | 3.05 |
| Polymerization Example 12 | 35.1 | 0.5 | 64.4 | 170 | 165 | 88.7 | 11.2 | 0.11 | 3.00 |
| Polymerization Example 13 | 40.0 | 0.6 | 59.4 | 170 | 165 | 88.7 | 11.2 | 0.11 | 2.59 |
| Polymerization Example 14 | 40.1 | 0.9 | 59.0 | 170 | 165 | 88.7 | 11.2 | 0.11 | 1.65 |
| Polymerization Example 15 | 30.8 | 0.5 | 68.6 | 170 | 155 | 91.3 | 8.6 | 0.09 | 2.24 |
| Polymerization Example 16 | 28.9 | 0.4 | 70.7 | 170 | 155 | 91.3 | 8.6 | 0.09 | 1.86 |
| Note 1) | MA: methyl acrylate | | | | | | | | |
| | MAH: maleic anhydride | | | | | | | | |
| | E: ethylene | | | | | | | | |

(continued)

| Polymerization Example | Copolymerization composition ratio | | | Polymerization conditions | | | | | |
|---|---|---|---|---|---|---|---|---|---|
| | MA content | MAH content | E content | Polymerization temperature | Polymerization pressure | Monomer composition | | | Polymerization rate |
| | | | | | | ethylene | MA | MAH | |
| | mol% | mol% | mol% | °C | MPa | wt% | wt% | wt% | kg/hr |
| Note 2) | The copolymerization composition ratio indicates the monomer composition in the obtained terpolymer | | | | | | | | |

In addition, the copolymerization composition of the terpolymer product was calculated from the main monomer composition ratio (MAIE) described later and the MAH content.

Example 1

| | | |
|---|---|---|
| (1) Terpolymer obtained in Polymerization Example 5 | | 100 parts by weight |
| | Ion exchange water | 18 parts by weight |
| | 1,8-diazabicyclo[5.4.0]-7-undecene [DBU] (produced by San-Apro Ltd.) | 1 part by weight |

Each of the above components was subjected to a ring-opening treatment using a 1 L kneader (DS1-5MHB-E, produced by Moriyama).

First, the kneader was preheated to 80 to 90°C, the polymer and the catalyst were supplied, and mastication was carried out at a rotation speed of 30 rpm for 2 minutes. Next, a specified amount of the ion exchange water was supplied. Next the mixture was kneaded at a rotation speed of 30 rpm for 15 minutes and then discharged. The temperature at the end of kneading was 92°C. Further, the discharged copolymer was cut into small pieces about 2 to 3 cm, followed by vacuum drying at a temperature of 60°C for 24 hours. The pressure at this time was -0.1 MPa (pressure display of the vacuum dryer). The water content was confirmed using a Kett moisture meter under the conditions of 120°C/15 min.

The cold resistance of the obtained ring-opened copolymer was measured using MFR (melt flow rate; according to JIS K-7210 corresponding to ISO 1133, 190°C, 2.16 kg) and DSC. For DSC, using DSC6220 produced by SII, the temperature was raised from -100°C to 100°C at a heating rate of 10°C/min, and the temperature at which the differential peak of the DSC curve was obtained was regarded as Tg.

Here, the composition (mol%) of the terpolymer was calculated from the main monomer composition ratio (MAIE) and the MAH content.

- The main monomer composition ratio (mol%) was measured by IR. First, a baseline was drawn at 4600 $cm^{-1}$ and 3500 $cm^{-1}$, and the height of 4254 $cm^{-1}$ peak derived from ethylene was measured. Next, a 1-point baseline was drawn at -3510 $cm^{-1}$, and the height of 3457 $cm^{-1}$ peak derived from MA was measured. Further, the peak ratio (A3457/A4254) was calculated, and the main monomer composition ratio (mol%) was calculated using a calibration curve of the MA content and IR absorbance ratio separately created by NMR.
- The MAH content (mol%) was measured by IR. First, a 1-point baseline was drawn at 4600 $cm^{-1}$, and the height of 4254 $cm^{-1}$ peak derived from ethylene was measured. Next, a baseline was drawn at 1875 $cm^{-1}$ and 1825 $cm^{-1}$, and the height of 1855 $cm^{-1}$ peak derived from MAH was measured. Further, the MAH content was calculated from the peak ratio (A1855/A4254) using a calibration curve of the MAH content and IR absorbance ratio separately created by a titration method.

In addition, the ring-opening rate (23°C, after 1 day and 2 days (when measuring rubber physical properties) of the ring-opened copolymer was calculated by the following calculation formula using the total content (mol%) of MAH and maleic acid and the MAH content (mol%).

$$\text{Ring-opening rate (\%)} = [1 - (\text{MAH content})/(\text{MAH content} + \text{maleic acid content})] \times 100$$

The total content (mol%) of MAH and maleic acid was measured by a neutralization titration method. First, 2 g of a sample was weighed and dissolved in 80 ml of tetrahydrofuran, followed by stirring with a magnetic stirrer for 2 hours. Next, in an automatic potentiometric titrator AT-710M (produced by Kyoto Electronics Manufacturing Co., Ltd.), a composite glass electrode non-aqueous titration electrode C-173 was used, and potentiometric titration was performed using a 0.1 mol/L potassium hydroxide aqueous solution. From the equivalence point, the total content (mol%) of MAH and maleic acid was calculated. For the MAH content (mol%), the IR method used in the measurement of the composition of the terpolymer was used.

| | |
|---|---|
| (2) Ring-opening treated copolymer obtained in the above (1) | 100 parts by weight |

(continued)

| | |
|---|---|
| Stearic acid | 2 parts by weight |
| Amine-based antioxidant (Nocrac CD, produced by Ouchi Shinko Chemical Industrial Co., Ltd.) | 2 parts by weight |
| FEF carbon black (Seast GS, produced by Tokai Carbon Co., Ltd.) | 50 parts by weight |
| Phosphoric acid half ester (Phosphanol RL210, produced by Toho Chemical Industry Co., Ltd.) | 1 part by weight |
| Stearyl amine (Farmin 80, produced by Kao Corporation) | 1 part by weight |

Each of the above components was kneaded using a 1 L kneader (DS1-5MHB-E, produced by Moriyama). Subsequently, using an 8 inch open roll (produced by Otake Kikai Kogyo K.K.), 1.2 parts by weight of hexamethylenediamine carbamate (CHEMINOX AC-6, produced by Unimatec Co., Ltd.) and 2 parts by weight of DBU-dodecane dihydrochloride (70% product; Vulcofac ACT55, produced by Safic-Alcan) were compounded, followed by kneading, thereby producing a composition for evaluating rubber physical properties. The obtained kneaded composition was subjected to primary vulcanization at 180°C for 10 minutes and oven vulcanization (secondary vulcanization) at 175°C for 4 hours, thereby molding a vulcanization sheet and a block for measuring compression set according to JIS.

The obtained composition and molded product were measured for each of the following items.

Mooney viscosity scorch: according to JIS K 6300 corresponding to ISO 289 model: AM-4 (produced by Toyo Seiki Seisaku-sho, Ltd.), 125°C
Normal state value: according to JIS K 6253 and JIS K 6251 corresponding to ISO 37
Heat aging resistance: according to JIS K 6257 corresponding to ISO 188 175°C/70 hrs; hardness change was evaluated.
Compression set: according to JIS K 6262 corresponding to ISO 815-1 175°C/70 hrs; 25% compression
Oil resistance: according to JIS K 6258 corresponding to ISO 1817
150°C/70 hrs; swelling with test oil IRM 903 was evaluated.

Example 2

In Example 1, the same amount (100 parts by weight) of the terpolymer obtained in Polymerization Example 6 was used as the terpolymer in the step (1).

Example 3

In Example 2, 2 parts by weight of dimethylstearylamine (Farmin DM8098, produced by Kao Corporation) was used as the ring-opening catalyst in the step (1).

Example 4

In Example 1, the same amount (100 parts by weight) of the terpolymer obtained in Polymerization Example 3 was used as the terpolymer in the step (1), and 3.6 parts by weight of DBU-dodecane dihydrochloride (70% product; Vulcofac ACT55) was used as the ring-opening catalyst.

Example 5

In Example 4, 2 parts by weight of DBU-octylate (U-CAT SA102, produced by San-Apro Ltd.) was used as the ring-opening catalyst in the step (1).

Example 6

In Example 4, 0.8 parts by weight of triethylenediamine (DABCO, produced by Tokyo Chemical Industry Co., Ltd.) was used as the ring-opening catalyst in the step (1).

The results obtained in the above Examples are shown in the following Table 2.

Table 2-1

| | | | | | | | |
|---|---|---|---|---|---|---|---|
| | | | | | | | |
| Measurement item | | Ex.1 | Ex.2 | Ex3 | Ex4 | Ex5 | Ex.6 |
| (Ring-opening treated copolymer) | | | | | | | |
| Composition ratio | (mol%) | | | | | | |
| Methyl acrylate | | 31.6 | 33.4 | 33.4 | 35.1 | 35.1 | 35.1 |
| Ethylene | | 67.8 | 66.2 | 66.2 | 64.5 | 64.5 | 64.5 |
| Maleic acid | | 0.52 | 0.38 | 0.37 | 0.38 | 0.38 | 0.33 |
| Maleic anhydride | | 0.08 | 0.02 | 0.03 | 0.02 | 0.02 | 0.07 |
| Compound temperature | (°C) | | | | | | |
| at the end of treatment | | 92 | 95 | 93 | 92 | 93 | 98 |
| MFR | (dg/min) | 41 | 9.8 | 10.2 | 10.8 | 10.2 | 10.5 |
| Tg | (°C) | -30.7 | -30.5 | -30.7 | -30.2 | -30.1 | -30.3 |
| Ring-opening rate | | | | | | | |
| 23°C x after 1 day | (%) | 80 | 91 | 83 | 90 | 91 | 75 |
| 23°C x after 2 days | (%) | 87 | 96 | 92 | 96 | 96 | 82 |
| | | | | | | | |
| Note: The composition ratio of the ring-opening treated copolymer indicates the monomer composition | | | | | | | |
| in the modified terpolymer after 2 days of modification | | | | | | | |

Table 2-2

| | | | | | | | |
|---|---|---|---|---|---|---|---|
| | | | | | | | |
| Measurement item | | Ex.1 | Ex. 2 | Ex3 | Ex. 4 | Ex.5 | Ex.6 |
| ML min (125°C ) | (pts) | 44 | 25 | 24 | 29 | 29 | 62 |
| t5 | (min) | 9.3 | 10.2 | 8.6 | 9.1 | 10 | 5.3 |
| Hardness (Duro A) | (pts) | 63 | 65 | 66 | 65 | 66 | 63 |
| 100% modulus | (MPa) | 3.7 | 3.6 | 3.9 | 3 | 3.6 | 3.9 |
| Tensile strengs | (MPa) | 15.9 | 18.3 | 19 | 16.5 | 17.9 | 19 |
| Elongation at break | (%) | 335 | 390 | 385 | 410 | 380 | 355 |
| Compression set (175°C, 70hr) | (%) | 23 | 23 | 23 | 24 | 21 | 23 |
| Heat resistance (175°C, 70hr) | | | | | | | |
| Hardness change | (pts) | +6 | +6 | +6 | +7 | +3 | +5 |
| Oil resistance (150°C, 70hr, IRM 903 oil) | | | | | | | |
| ΔV100 | (%) | +64.6 | +62.1 | +64.6 | +55.3 | +54.2 | +53.8 |

Comparative Example 1

In Example 1, the terpolymer (MFR 40) that had not been subjected to the ring-opening treatment in the step (1) was subjected to the vulcanization in the step (2); however, scorch occurred during kneading, and the various characteristics of the vulcanizate could not be measured.

Comparative Example 2

In Example 2, the terpolymer (MFR 9.6) that had not been subjected to the ring-opening treatment in the step (1) was subjected to the vulcanization in the step (2); however, scorch occurred during kneading, and the various characteristics of the vulcanizate could not be measured.

Comparative Example 3

In Example 4, the terpolymer (MFR 10.3) that had not been subjected to the ring-opening treatment in the step (1) was subjected to the vulcanization in the step (2); however, scorch occurred during kneading, and the various characteristics of the vulcanizate could not be measured.

Example 7

In Example 1, the same amount (100 parts by weight) of the terpolymer obtained in Polymerization Example 10 was used as the terpolymer in the step (1), and DBU-dodecane dihydrochloride was not used in the step (2).

Example 8

In Example 7, the same amount (100 parts by weight) of the terpolymer obtained in Polymerization Example 11 was used as the terpolymer in the step (1).

Example 9

In Example 7, the same amount (100 parts by weight) of the terpolymer obtained in Polymerization Example 12 was used as the terpolymer in the step (1).

Example 10

In Example 7, the same amount (100 parts by weight) of the terpolymer obtained in Polymerization Example 13 was used as the terpolymer in the step (1).

Example 11

In Example 7, the same amount (100 parts by weight) of the terpolymer obtained in Polymerization Example 14 was used as the terpolymer in the step (1).

Comparative Example 4

In Example 7, the same amount (100 parts by weight) of the terpolymer obtained in Polymerization Example 1 was used as the terpolymer in the step (1).

Comparative Example 5

In Example 7, the same amount (100 parts by weight) of the terpolymer obtained in Polymerization Example 2 was used as the terpolymer in the step (1).

The results obtained in Examples 7 to 11, and Comparative Example 4 are shown in the following Table 3. However, in Comparative Example 5, the vulcanizable composition was highly sticky, and kneading was impossible.

| Table 3-1 | | | | | | | | |
|---|---|---|---|---|---|---|---|---|
| | | | | | | | | |

(continued)

| Measurement item | | Ex.7 | Ex.8 | Ex. 9 | Ex.10 | Ex 11 | Comp. Ex. 4 | Comp. Ex. 5 |
|---|---|---|---|---|---|---|---|---|
| (Ring-opening treated copolymer) | | | | | | | | |
| Composition ratio | (mol%) | | | | | | | |
| Methyl acrylate | | 29.6 | 29.2 | 35.1 | 40 | 40.1 | 17.8 | 30.2 |
| Ethylene | | 70.1 | 70.3 | 64.4 | 59.4 | 59 | 81.7 | 69.4 |
| Maleic acid | | 0.28 | 0.45 | 0.49 | 0.55 | 0.78 | 0.45 | 0.36 |
| Maleic anhydride | | 0.02 | 0.05 | 0.01 | 0.05 | 0.12 | 0.05 | 0.04 |
| Compound temperature | (°C) | 101 | 102 | 97 | 104 | 95 | 92 | 92 |
| at the end of treatment | | | | | | | | |
| MFR | (dg/min) | 11.6 | 12.5 | 10.7 | 11.1 | 18.8 | 11.4 | 150 |
| Tg | (°C) | -31.1 | -31.2 | -31.5 | -29.6 | -26.8 | -36.2 | -28.9 |
| Ring-opening rate | (%) | | | | | | | |
| 23°C x after 1 day | (%) | 86 | 84 | 92 | 87 | 80 | 82 | 81 |
| 23°C x after 2 days | (%) | 92 | 90 | 98 | 92 | 87 | 90 | 89 |
| | | | | | | | | |
| Note: The composition ratio of the ring- opening treated copolymer indicates the monomer composition in the modified terpolymer after 2 days of modification | | | | | | | | |

Table 3-2

| Measurement item | | Ex.7 | Ex.8 | Ex.9 | Ex. 10 | Ex.11 | Comp. Ex. 4 |
|---|---|---|---|---|---|---|---|
| ML min (125°C ) | (pts) | 16 | 23 | 27 | 32 | 59 | 35 |
| t5 | (min) | 14.7 | 9.2 | 9.9 | 8.4 | 4.2 | 8.5 |
| Hardness (Duro A) | (pts) | 63 | 60 | 63 | 63 | 61 | 65 |
| 100% modulus | (MPa) | 3.4 | 2.5 | 3.6 | 3.9 | 3.9 | 3.8 |
| Tensile strengs | (MPa) | 17.2 | 17.5 | 16.8 | 16.5 | 15.6 | 17.1 |
| Elongation at break | (%) | 400 | 380 | 365 | 345 | 325 | 345 |
| Compression set (175°C, 70hr) | (%) | 18 | 12 | 17 | 17 | 12 | 18 |
| Heat resistance (175°C, 70hr) | | | | | | | |
| Hardness change | (pts) | +3 | -1 | +4 | +3 | +4 | +3 |
| Oil resistance (150°C, 70hr, IRM 903 | oil) | | | | | | |
| ΔV100 | (%) | +64.5 | +58.0 | +48.7 | +45.5 | +36.8 | +125.2 |

Example 12

In Example 5, wherein DBU-octylate (Mw 296.4) was used as the ring-opening catalyst, the same amount (100 parts by weight) of the terpolymer of Polymerization Example 15 was used in place of the terpolymer of Polymerization Example 3 in the step (1).

Example 13

In Example 12, the same amount (100 parts by weight) of the terpolymer of Polymerization Example 16 was used in place of the terpolymer of Polymerization Example 15 in the step (1).

Example 14

In Example 12, the same amount (100 parts by weight) of the terpolymer of Polymerization Example 7 was used in place of the terpolymer of Polymerization Example 15 in the step (1), and 6.04 parts by weight of a 33.8 wt.% aqueous solution of DBU-octylate was used. Further, a twin screw extruder TEM26SX (produced by Toshiba Machine Co., Ltd., screw diameter: 26 mm, LID = 64) was used in place of the 1 L kneader. First, the copolymer was press-molded at a temperature of 100°C according to JIS K7151 corresponding to ISO293, and rapidly cooled by the cooling method C (60 ± 30 K/min) to produce a press sheet with a thickness of 6 mm. This sheet was cut to an appropriate width to produce a terpolymer for supply. Next, the terpolymer was continuously supplied to the twin screw extruder, followed by melt kneading. A liquid addition nozzle was attached to the midsection of the kneading zone of the twin screw extruder, a specified amount of ring-opening agent based on 100 parts by weight of the total amount of the copolymer components was continuously injected using a liquid addition device, and melt kneading was further continued to subject the copolymer to ring-opening treatment. The copolymer extruded from the twin screw extruder to form a strand was passed through a cooling water bath, thereby obtaining the ring-opened copolymer. At this time, the modification temperature was 190°C, the screw rotation speed was 300 rpm, the amount of terpolymer added was 11 kg/hr, and the amount of ring-opening agent added was 0.66 kg/hr.

Example 15

In Example 14, the same amount (100 parts by weight) of the terpolymer of Polymerization Example 8 was used in place of the terpolymer of Polymerization Example 7 in the step (1).

The results obtained in Examples 12 to 15 are shown in the following Table 4.

Table 4-1

| | | | | | |
|---|---|---|---|---|---|
| Measurement item | | Ex. 12 | Ex.13 | Ex.14 | Ex.15 |
| [Ring-opening treated copolymer] | | | | | |
| Composition ratio | (mol%) | | | | |
| Methyl acrylate | | 30.8 | 28.9 | 29.4 | 26.8 |
| Ethylene | | 68.7 | 70.7 | 70.1 | 72.8 |
| Maleic acid | | 0.47 | 0.38 | 0.48 | 0.396 |
| Maleic anhydride | | 0.03 | 0.02 | 0.02 | 0.004 |
| MFR | (dg/min) | 10.7 | 7.1 | 11.7 | 9.2 |
| Tg | (°C) | -32 | -30.9 | -31.2 | -31.6 |
| Ring-opening rate | (%) | | | | |
| 23°C x after 1 day | | 76.0 | 72.0 | 65.9 | 71.0 |
| 23°C x after 30 days | | 94.0 | 95.9 | | |
| 23°C x after 37 days | | | | 95.9 | 98.9 |
| | | | | | |

(continued)

| Measurement item | | Ex. 12 | Ex.13 | Ex.14 | Ex.15 |
|---|---|---|---|---|---|
| [Ring-opening treated copolymer] | | | | | |
| Composition ratio | (mol%) | | | | |
| Note: The composition ratio of the ring-opening treated copolymer indicates the monomer composition in the modified terpolymer after 30 days of modification in Examples 12 and 13, and the monomer composition in the modified terpolymer after 37 days of modification in Examples 14 and 15. | | | | | |

Table 4-2

| | | | | | |
|---|---|---|---|---|---|
| Measurement item | | Ex. 12 | Ex.13 | Ex. 14 | Ex. 15 |
| ML min (125°C ) | (pts) | 20 | 27.8 | 30 | 32 |
| t5 | (min) | 11.3 | 11.2 | 8.2 | 9.5 |
| Hardness (Duro A) | (pts) | 62 | 62 | 60 | 61 |
| 100% modulus | (MPa) | 2.8 | 3.0 | 3.6 | 2.7 |
| Tensile strengs | (MPa) | 18.2 | 18.4 | 18.0 | 18.7 |
| Elongation at break | (%) | 410 | 400 | 351 | 390 |
| Compression set (175°C, 70hr) | (%) | 19 | 18 | 18 | 20 |

Example 16

In Example 14, 100 parts by weight of the terpolymer obtained in Polymerization Example 9, 1 part by weight of ion exchange water, and 2 parts by weight of DBU-octylate as a ring-opening catalyst were used. In the same manner as in Example 14, a terpolymer for supply was produced and continuously supplied into a twin screw extruder together with a predetermined amount of the ring-opening catalyst, followed by melt kneading. From the liquid addition nozzle in the midsection of the kneading zone of the twin screw extruder, a specified amount of ion exchange water based on 100 parts by weight of the total amount of the copolymer components was continuously injected using a liquid addition device, melt kneading was further continued to subject the copolymer to ring-opening treatment, and cooling was performed.

The conditions for the ring-opening treatment using a twin screw extruder were as follows: modification temperature: 120°C, screw rotation speed: 300 rpm, the amount of modified copolymer discharged: 18 kg/hr, the amount of ring-opening catalyst supplied: 0.36 kg/hr, and the amount of ion exchange water added: 0.18 kg/hr.

Example 17

In Example 16, the amount of the ring-opening catalyst was changed to 1.5 parts by weight, and the amount of the ring-opening catalyst supplied was changed to 0.27 kg/hr, respectively.

Example 18

In Example 16, the amount of the ring-opening catalyst in the step (1) was changed to 1 part by weight, and the amount of the ring-opening catalyst supplied was changed to 0.18 kg/hr, respectively. In addition, in the step (2), 1.2 parts by weight of hexamethylenediamine carbamate (CHEMINOX AC-6) and 2 parts by weight of DBU-dodecane dihydrochloride (70% product) were further used as the ring-opening catalyst.

Example 19

In Example 18, the amount of the ring-opening catalyst was changed to 0.5 parts by weight, and the amount of the ring-opening catalyst supplied was changed to 0.09 kg/hr, respectively.

Example 20

In Example 18, the ring-opening catalyst was changed to 1 part by weight of 2-methylimidazole, the amount of the ring-opening catalyst supplied was changed to 0.18 kg/hr and the amount of the ion exchange water added was changed to 3 parts by weight (the amount of the ion exchange water added: 0.54 kg/hr), respectively.

Example 21

In Example 18, the ring-opening catalyst was changed to 0.5 parts by weight of 2-methylimidazole, the amount of the ring-opening catalyst supplied was changed to 0.09 kg/hr and the amount of the ion exchange water added was changed to 1.5 parts by weight (the amount of the ion exchange water added: 0.27 kg/hr), respectively.

The results obtained in Examples 16 to 21 are shown in the following Table 5.

Table 5-1

| | | | | | | | |
|---|---|---|---|---|---|---|---|
| Measurement item | | Ex.16 | Ex.17 | Ex.18 | Ex.19 | Ex.20 | Ex. 21 |
| [Ring-opening treated copolymer] | | | | | | | |
| Composition ratio | (mol%) | | | | | | |
| Methyl acrylate | | 29.3 | 29.3 | 29.3 | 29.3 | 29.3 | 29.3 |
| Ethylene | | 70.2 | 70.2 | 70.2 | 70.2 | 70.2 | 70.2 |
| Maleic acid | | 0.48 | 0.47 | 0.46 | 0.43 | 0.48 | 0.44 |
| Maleic anhydride | | 0.02 | 0.03 | 0.04 | 0.07 | 0.02 | 0.06 |
| MFR | (dg/min) | 8.8 | 8.6 | 8.5 | 8.2 | 8.5 | 8.1 |
| Tg | (°C) | -31.1 | -31.3 | -31.2 | -31.0 | -31.4 | -31.1 |
| Ring-opening rate | | | | | | | |
| 23°C x after 1 day | (%) | 76.3 | 63.4 | 47.5 | 23.7 | 65.2 | 31.8 |
| 23°C x after 33 days | (%) | 96.0 | 93.9 | 91.1 | 85.5 | 95.5 | 88.8 |
| | | | | | | | |
| Note: The composition ratio of the ring-opening treated copolymer indicates the monomer composition in the modified terpolymer after 33 days of modification | | | | | | | |

Table 5-2

| | | | | | | | |
|---|---|---|---|---|---|---|---|
| Measurement item | | Ex. 16 | Ex. 17 | Fx. 18 | Ex.19 | Ex.20 | Ex.21 |
| ML min (125°C) | (pts) | 25 | 39 | 34 | 43 | 37 | 36 |
| t5 | (min) | 9.6 | 6.2 | 7.3 | 6.4 | 6.4 | 6.9 |
| Hardness (Duro A) | (pts) | 59 | 59 | 60 | 61 | 62 | 62 |
| 100% modulus | (MPa) | 3.0 | 2.6 | 2.6 | 2.9 | 3.0 | 3.1 |
| Tensile strengs | (MPa) | 19.3 | 18.6 | 18.0 | 18.4 | 18.3 | 18.6 |
| Elongation at break | (%) | 336 | 345 | 373 | 362 | 359 | 361 |
| Compression set (175°C, 70hr) | (%) | 14 | 15 | 19 | 16 | 18 | 18 |

(continued)

| Measurement item | | Ex. 16 | Ex. 17 | Fx. 18 | Ex.19 | Ex.20 | Ex.21 |
|---|---|---|---|---|---|---|---|
| Heat resistance (175°C, 70hr) | | | | | | | |
| Hardness change | (pts) | +4 | +3 | +3 | +1 | +1 | +1 |
| Oil resistance (150°C, 70hr, IRM 903 oil) | | | | | | | |
| ΔV100 | (%) | 63.1 | 65 | 68.1 | 65.2 | 66.4 | 65.6 |

Comparative Example 6

In Example 18, the ring-opening treatment using a twin screw extruder in the step (1) was not performed. As a result, scorch occurred during kneading of the vulcanizable composition, and various characteristics could not be measured.

Example 22

| | | |
|---|---|---|
| (1) Terpolymer obtained in Polymerization Example 11 | | 100 parts by weight |
| | Ion exchange water | 18 parts by weight |
| | DBU-octylate | 2 parts by weight |

Each of the above components was subjected to the ring-opening treatment using a 1 L kneader (DS1-5MHB-E, produced by Moriyama) under the same conditions as in Example 1 (1), and a ring-opened modified copolymer (MFR: 12.6 dg/min, Tg: -32.0°C) was obtained. The compound temperature at the end of kneading was 98°C.

(2) Each of the components of Example 1 (2) was added to the ring-opened modified copolymer whose composition ratio after 30 days of modification was 29.2 (mol%) of methyl acrylate, 70.2 (mol%) of ethylene, 0.43 (mol%) of maleic acid, and 0.07 (mol%) of maleic anhydride.

| | |
|---|---|
| 1 L kneader kneaded compound | 156 parts by weight |
| Hexamethylenediamine carbamate (CHEMINOX AC-6) | 1.2 parts by weight |

The above components were added, followed by primary vulcanization at 180°C for 8 minutes and oven vulcanization at 175°C for 4 hours.

Example 23

In Example 22 (2), 2 parts by weight of DBU-dodecane dihydrochloride (70% product) was further used.

Example 24

In Example 22 (2), 4 parts by weight of 1,3-di-o-tolylguanidine (Nocceler DT, produced by Ouchi Shinko Chemical Industrial Co., Ltd.) was further used.

Example 25

In Example 22 (2), 1.9 parts by weight of 4,4'-bis(aminocyclohexyl)methane carbamate (CHEMINOX AC-9, produced by Unimatec Co., Ltd.) was used in place of hexamethylenediamine carbamate, and 2 parts by weight of DBU-dodecane dihydrochloride (70% product) was further used.

Example 26

In Example 22 (2), 2.6 parts by weight of N,N'-dicinnamylidene-1,6-hexanediamine (Diak#3, produced by Chemours) was used in place of hexamethylenediamine carbamate, and 2 parts by weight of DBU-dodecane dihydrochloride (70% product) was further used.

Example 27

In Example 22 (2), 4 parts by weight of 1,6-bis[(9-fluorenylmethyl)carbamate]hexane was used in place of hexamethylenediamine carbamate, and 2 parts by weight of DBU-dodecane dihydrochloride (70% product) was further used.

Comparative Examples 7 to 11

In Examples 23 to 27, the same amount (100 parts by weight) of the untreated copolymer was used each in place of the ring-opened copolymer.

The results obtained in Examples 22 to 27, and Comparative Example 11 are shown in the following Table 6. The various characteristics of the vulcanizable compositions of Comparative Examples 7 to 10 could not be measured because scorch occurred during kneading.

Table 6

| | | | | | | | | |
|---|---|---|---|---|---|---|---|---|
| | | | | | | | Ex.27 | Comp. Ex. 11 |
| Measurement item | | Ex.22 | Ex.23 | Ex.24 | Ex.25 | Ex.26 | | |
| MLmin (125°C ) | (pts) | 21 | 20 | 18 | 18 | 16 | 11 | 12 |
| t5 | (min) | 9 | 11.1 | 22 | 14.8 | 7.8 | 25.4 | >30 |
| Hardness (Duro A) | (pts) | 62 | 62 | 58 | 65 | 61 | 63 | 61 |
| 100% modulus | (MPa) | 3.2 | 3.1 | 2.4 | 2.6 | 2.2 | 2.6 | 2.3 |
| Tensile strengs | (MPa) | 18.2 | 17.8 | 16.6 | 18.5 | 15.7 | 16.0 | 15.8 |
| Elongation at break | (%) | 355 | 360 | 415 | 375 | 485 | 435 | 425 |
| Compression set (175°C, 70hr) | (%) | 18 | 18 | 43 | 48 | 43 | 26 | 21 |
| Heat resistance (175°C, 70hr) | | | | | | | | |
| Hardness change | (pts) | +2 | +4 | +5 | +2 | +5 | +6 | +3 |
| Oil resistance (150°C, 70hr, IRM 903 oil) | | | | | | | | |
| ΔV100 | (%) | +64.4 | +64.8 | +67.4 | +69.2 | +73.7 | +65.7 | +64.8 |

**Claims**

1. An ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid, and 0.001 to 20.0 mol% of an unsaturated dicarboxylic anhydride are copolymerized, and having a melt flow rate of 0.01 to 100 g/10 min measured under the conditions of a temperature of 190°C and a load of 2.16 kg.

2. The ethylene-(meth)acrylate-based elastomer according to claim 1, wherein the ratio of the unsaturated dicarboxylic acid compound structure is 20 to 99.9 mol% to the total amount of the unsaturated dicarboxylic anhydride and the dicarboxylic acid structure being its ring-opening treated product.

3. The ethylene-(meth)acrylate-based elastomer according to claim 1, wherein the alkyl (meth)acrylate is methyl acrylate.

4. The ethylene-(meth)acrylate-based elastomer according to claim 1, wherein the unsaturated dicarboxylic acid is

maleic acid, and the unsaturated dicarboxylic anhydride is maleic anhydride.

5. A method for producing an ethylene-(meth)acrylate-based elastomer wherein an anhydride of copolymer of ethylene, an alkyl (meth)acrylate containing an alkyl group having 1 to 8 carbon atoms and/or an alkoxy (meth)acrylate containing an alkoxyalkyl group having 2 to 8 carbon atoms and an unsaturated dicarboxylic anhydride is subjected to a ring-opening treatment.

6. The method for producing an ethylene-(meth)acrylate-based elastomer according to claim 5, wherein the ring-opening treatment is performed by a shear melt-kneading method.

7. The method for producing an ethylene-(meth)acrylate-based elastomer according to claim 6, wherein the shear melt-kneading method is performed using a closed kneader or a twin screw extruder.

8. The method for producing an ethylene-(meth)acrylate-based elastomer according to claim 5, wherein the ring-opening treatment is performed using water.

9. The method for producing an ethylene-(meth)acrylate-based elastomer according to claim 5, wherein the ring-opening treatment is performed using a ring-opening catalyst.

10. The method for producing an ethylene-(meth)acrylate-based elastomer according to claim 9, wherein the ring-opening catalyst is a basic compound or an organic amine compound.

11. The method for producing an ethylene-(meth)acrylate-based elastomer according to claim 5, wherein an aging treatment is performed after the ring-opening treatment.

12. An ethylene-(meth)acrylate-based elastomer composition comprising the ethylene-(meth)acrylate-based elastomer according to claim 1 compounded with a vulcanizing agent.

13. A vulcanization molded article obtained by vulcanization molding of the ethylene-(meth)acrylate-based elastomer composition according to claim 12.

## INTERNATIONAL SEARCH REPORT

International application No.
**PCT/JP2022/012516**

**A. CLASSIFICATION OF SUBJECT MATTER**

***C08F 8/00***(2006.01)i; ***C08F 210/02***(2006.01)i; ***C08L 23/08***(2006.01)i
FI: C08F210/02; C08F8/00; C08L23/08

According to International Patent Classification (IPC) or to both national classification and IPC

**B. FIELDS SEARCHED**

Minimum documentation searched (classification system followed by classification symbols)

C08F8/00; C08F210/02; C08L23/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-272204 A (SHOWA DENKO KK) 02 December 1986 (1986-12-02) claims, industrial application fields, page 3, upper left, lines 19-20, page 4, upper right, lines 6-11, examples, etc. | 1-4, 12-13 |
| A | JP 2010-523735 A (LG CHEMICAL LTD.) 15 July 2010 (2010-07-15) paragraphs [0088], [0089] | 1-4, 12-13 |
| A | JP 1-156309 A (SHOWA DENKO KK) 19 June 1989 (1989-06-19) entire text | 1-4, 12-13 |
| A | JP 2003-213234 A (UNITIKA LTD.) 30 July 2003 (2003-07-30) entire text | 1-4, 12-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/012516**

**Box No. III Observations where unity of invention is lacking (Continuation of item 3 of first sheet)**

This International Searching Authority found multiple inventions in this international application, as follows:

Invention 1: Claims 1-4 and 12-13

Claims 1-4 and 12-13 have the special technical feature of an ethylene-(meth)acrylate elastomer having a structure resulting from copolymerization of 40-79.9% by mole of ethylene, 20.0-50.0% by mole of an alkyl (meth)acrylate having a C1-8 alkyl group and/or an alkoxy (meth)acrylate having a C2-8 alkoxyalkyl group, 0.05-20.0% by mole of an unsaturated dicarboxylic acid and 0.001-20.0% by mole of an unsaturated dicarboxylic anhydride, and having a melt flow rate measured under conditions of a temperature of 190°C and a load of 2.16 kg of 0.01-100 g/10 min, and thus are classified as invention 1.

Invention 2: Claims 5-11

Claim 5 and claim 1 classified as invention 1 share the technical feature of an ethylene-(meth)acrylate elastomer having a structure resulting from copolymerization of ethylene, an alkyl (meth)acrylate having a C1-8 alkyl group and/or an alkoxy (meth)acrylate having a C2-8 alkoxyalkyl group, an unsaturated dicarboxylic acid and an unsaturated dicarboxylic anhydride. However, said technical feature does not make a contribution over the prior art in light of the disclosures in documents 1 and 2, and thus cannot be said to be a special technical feature. Moreover, there are no other same or corresponding special technical features among said inventions.

(Document 1 indicates in example 8 that an ethylene-methyl methacrylate-maleic anhydride ternary random copolymer is hydrolyzed in the presence of an acid and the degree of hydrolysis can be controlled to obtain an ethylene-methyl methacrylate-maleic anhydride-maleic acid quaternary random copolymer, and thus can be said to practically disclose an ethylene-(meth)acrylate elastomer having the structure resulting from copolymerization of ethylene, an alkyl (meth)acrylate having a C1-8 alkyl group and/or an alkoxy (meth)acrylate having a C2-8 alkoxyalkyl group, an unsaturated dicarboxylic acid and an unsaturated dicarboxylic anhydride. Document 2 also indicates in example 1 and the like that an ethylene-methyl methacrylate-maleic anhydride ternary copolymer is hydrolyzed and the conversion rate to dicarboxylic acid of hydrolysis is 0.5-100%, and thus can be said to practically disclose an ethylene-(meth)acrylate elastomer having the structure resulting from copolymerization of ethylene, an alkyl (meth)acrylate having a C1-8 alkyl group and/or an alkoxy (meth)acrylate having a C2-8 alkoxyalkyl group, an unsaturated dicarboxylic acid and an unsaturated dicarboxylic anhydride.)

Furthermore, claims 5-11 are not dependent on claim 1. Moreover, claims 5-11 are not substantially identical to or similarly closely related to any of the claims classified as invention 1.

Accordingly, claims 5-11 cannot be classified as invention 1.

Claims 5-11 have the special technical feature of a method for producing an ethylene-(meth)acrylate elastomer, characterized by subjecting a copolymer of ethylene, an alkyl (meth)acrylate having a C1-8 alkyl group and/or an alkoxy (meth)acrylate having a C2-8 alkoxyalkyl group and an unsaturated dicarboxylic anhydride to ring-opening treatment of the acid anhydride, and thus are classified as invention 2.

Document 1: JP 2010-523735 A, paragraphs [0088]-[0089]
Document 2: JP 61-272204 A, claims, industrial applicability, examples, etc.

**INTERNATIONAL SEARCH REPORT**

International application No.
**PCT/JP2022/012516**

**Box No. III Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-4 and 12-13**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/012516**

| Patent document cited in search report | Publication date (day/month/year) | Patent family member(s) | Publication date (day/month/year) |
|---|---|---|---|
| JP 61-272204 A | 02 December 1986 | (Family: none) | |
| JP 2010-523735 A | 15 July 2010 | US 2010/0197872 A1<br>paragraphs [0101]-[0102]<br>WO 2008/120912 A1<br>KR 10-2008-0089242 A<br>CN 101679565 A | |
| JP 1-156309 A | 19 June 1989 | (Family: none) | |
| JP 2003-213234 A | 30 July 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 50049389 A
- JP 60240749 A
- JP 61272204 A
- JP 7094486 B
- JP 8025586 A
- JP 2010235955 A